# EUROPEAN PATENT APPLICATION

(11) **EP 1 852 861 A2**
(43) Date of publication of application: **07.11.2007**
(21) Application number: 07101463.3
(22) Date of filing: 31.01.2007
(51) Int. Cl.: G11B 7/24

(54) **Recording media and method of manufacturing recording media**

(30) Priority: 28.04.2006 JP 2006126809
(71) Applicant: FUJITSU LIMITED, Kawasaki-shi, Kanagawa 211-8588 (JP); FUJITSU TEN LIMITED, Kobe-shi Hyogo 652-8510 (JP)
(72) Inventor: Tabata, Fumio, Hyogo-ku Kobe-shi Hyogo 652-8510 (JP); Hosokawa, Tetsuo c/o FUJITSU LIMITED, Kawasaki-shi Kanagawa 211-8588 (JP); Mitsutani, Takeshi, Joso-shi Joso-shi Ibaraki 300-2722 (JP); Miyata, Katsunori, Ibaraki-shi Osaka 567-8567 (JP)
(74) Representative: Seeger, Wolfgang

(57) **Abstract**

A mark is formed on a resist disk according to set values of indexes representing magnitudes of causes that affect deterioration in a quality of a playback signal at the time of signal playback. A ROM media is manufactured using the resist disk.

## Description

### BACKGROUND OF THE INVENTION

### 1. Field of the Invention

The present invention relates to a recording media and the like that record signals, and, more particularly to a recording media and a recording media manufacturing method with which it is possible to quantitatively simulate irregularity of a playback waveform that could occur in real use.

### 2. Description of the Related Art

Recordable optical disk media such as a CD-R, a CD-RW, a DVD-R, a DVD-RW, or a DVD-RAM have become common as compact data recording and playing media. Sometimes same device is used to record and play the data. Sometimes different devices are used to record the data and to play the data. An important requirement is that the data can be read without an error.

However, recording conditions, which are conditions at the time of recording data in a recording media can vary. The recording conditions change at various playback devices or by various recording media, fluctuation in temperature or humidity inside the playback device. Such variations in the recording conditions can cause defects (hereinafter, "deficiencies") like distortion of a playback waveform or an increase in jitter. In the worst case, an error occurs to make it impossible to replay data.

It is common to use a test disk to check if there is any sever error in a recording media due to changes in the recording conditions. As such a test disk, a recording media in which data is recorded under optimum conditions or a recording media that has a playback error because of some cause are used.

Japanese Patent No. 3674545, Japanese Patent Application Laid-Open Nos. H10-233040, H10-83506, 2000-322782, 2002-334481, and H9-274741 disclose methods of manufacturing a test disk.

In the conventional playback inspection, a recording media in which data is recorded under optimum conditions, not affected by various fluctuation factors related to recording, is used as a test disk of a playback device. Alternatively, an inspection is carried out by an actual recording media that has deficiencies because of a cause related to recording in the market and a method of improvement is developed.

In the actual market, conditions of recording in a recording media change because of various causes. All recording media in which data is recorded even under various conditions have to be played without an error. However, if inspection of a playback device is performed using a recording media in which data is recorded under nearly ideal conditions without various fluctuations at the time of recording as described above, it is impossible to predict deficiencies concerning play of recording media in which data is recorded under various recording conditions in the market.

In the method, for inspection or evaluation, since a recording media in the market that has unknown deficiencies, because a cause of fluctuation in recording conditions is unknown, it is highly likely that the inspection is not sufficient. There is also a problem in that a method for improvement of playability is not obtained.

The methods of manufacturing a test disk are disclosed in Japanese Patent No. 3674545, Japanese Patent Application Laid-Open Nos. H10-233040, H10-83506, 2000-322782, and 2002-334481. The methods make deforming substrate shapes like a vertical deviation of a recording media. So, it is impossible to simulate irregularity of a playback waveform due to fluctuation in conditions of recording in recording media such as a CD-R, a CD-RW, a DVD-R, and a DVD-RW. Likewise the method of manufacturing a test disk disclosed in the Japanese Patent Application Laid-Open H9-274741, it is impossible to simulate the irregularity of a playback waveform due to fluctuation in recording conditions described above.

A factor of variation of disks actually shipped to the market is not only deformation of substrate shapes such as a vertical deviation of a recording media but also general variation including variation in recording conditions. Thus, a serious problem about a quality like a playback error occurs.

Thus, there is a need of a technology for quantitatively and stably simulating irregularity of a playback waveform that could occur in the market, i.e., in real use.

### SUMMARY OF THE INVENTION

It is an object of the present invention to at least partially solve the problems in the conventional technology.

According to an aspect of the present invention, in a recording media that records a signal, a mark is formed on a stamper according to a set value of an index representing a magnitude of a cause affecting deterioration in a quality of a playback signal at the time of signal playback, and a signal is recorded using the stamper with the mark formed thereon.

According to another aspect of the present invention, a method of manufacturing a recording media having a signal recorded therein includes forming a mark on a stamper according to a set value representing a magnitude of a cause affecting deterioration in a quality of a playback signal at the time of signal playback; and manufacturing a recording media having a signal recorded therein using the stamper.

According to still another aspect of the present invention, in a recording media, depths of phase pits in a predetermined mark are not uniform, that is, a portion shallower than a maximum depth of a front edge and a maximum depth at a rear edge in the mark is formed between the front edge and the rear edge.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic for explaining the concept of a method of manufacturing a recording media according to an embodiment of the present invention;
Fig. 2 is a plan view of an example of phase pits formed on a resist disk;
Fig. 3 is an example of an exposure waveform;
Fig. 4 is an example of ideal waveforms;
Fig. 5 is an example of playback waveforms that is affected by heat accumulation;
Fig. 6 is a graph of a relation between h₁/h₂ of an exposure waveform and an amount of waveform irregularity d/b due to heat accumulation;
Fig. 7 is a flowchart of a process of manufacturing a ROM media after molding;
Fig. 8A is a plan view of an example of phase pits formed on a resist substrate when h_{1/}h₂ is adjusted;
Fig. 8B is a sectional view of a phase pit formed on the resist substrate when h_{1/}h₂ is adjusted;
Fig. 9 is a graph of a relation between an exposure waveform and a playback waveform;
Fig. 10 is a graph of a relation between exposure power and symmetry;
Fig. 11 is a graph of a relation between a pulse width of a shortest mark and symmetry;
Fig. 12 is a graph of a relation between a level of applied noise and jitter;
Fig. 13 is a graph of a relation between Al layer thickness and reflectance;
Fig. 14 is a graph of a relation between mold temperature and a degree of modulation;
Fig. 15 is a graph of a relation between an amount of resin and board thickness; and
Fig. 16 is a table of an example of an orthogonal array according to the embodiment.

### DETAILED DESCRIPTION OF THE PREFERRED EMBODIMENTS

Exemplary embodiments of the present invention are explained in detail below with reference to the accompanying drawings.

The embodiments relate to first producing a stamper and then manufacturing a recording media by using the stamper. When producing the stamper, mark or marks are formed on the stamper according to set values of indexes representing magnitudes of causes (heat accumulation, symmetry, noise, reflectance, a degree of modulation, board thickness, etc.) affecting deterioration in a quality of a playback signal at the time of signal playback (a quality of a playback signal is deteriorated by shifting the set values from an optimum value). As a result, a recording media according to the present invention can simulate irregularities of a playback waveform that could occur in the market, i.e., at user's side, so that inspection of a playback device is performed accurately by using the recording media.

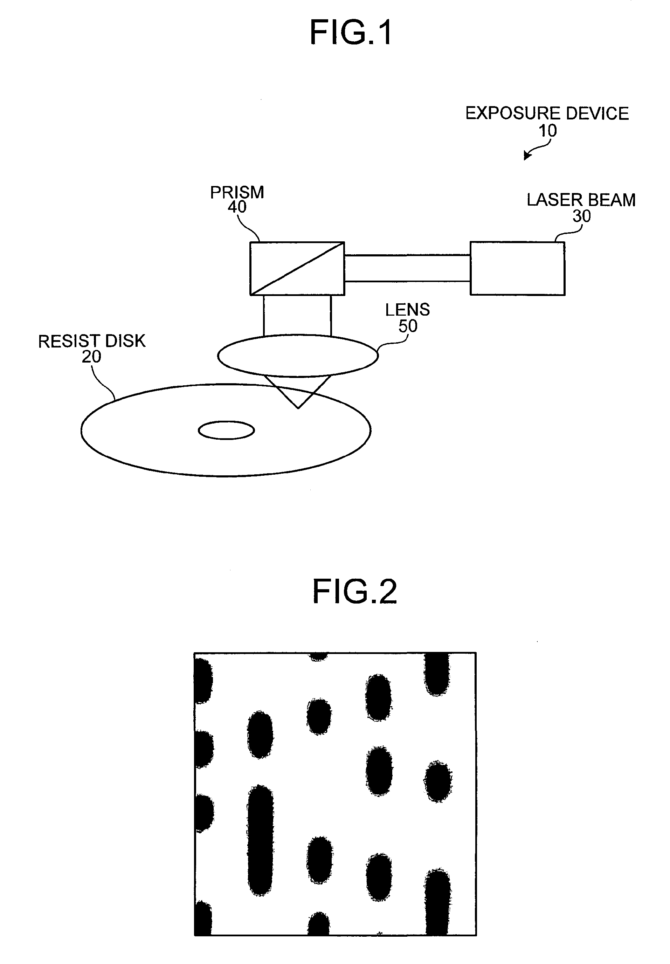

Fig. 1 is a schematic for explaining the concept of a method of manufacturing a recording media according to an embodiment of the present invention. Phase pits of a ROM optical disk such as a CD-ROM or a DVD-ROM are formed by an exposure device 10 shown in Fig. 1. A stamper having phase pits formed thereon is completed on a resist disk 20 by irradiating a laser beam on the resist disk 20 (irradiating a laser beam, which is irradiated from a laser beam source 30 via a prism 40 and a lens 50, on the resist disk 20).

Fig. 2 is a diagram of an example of phase pits formed on the resist disk 20. Phase pits of various lengths are formed on the resist disk 20 by adjusting a pulse width of the laser beam from the laser beam source 30. To form the phase pits long, a pulse width of an exposure waveform only has to be set long. In general, length of a phase pit is in the range of 3T to 11T in case of CD. As a numeral affixed before T is larger, the phase pit is longer (a shortest phase pit is 3T and a longest phase pit is 11T).

The stamper formed by the exposure process described above and the plate process (not shown) is attached to a mold (not shown) of a molding machine (not shown) to mold a resin substrate of polycarbonate or the like. This makes it possible to stably manufacture a large quantity of recording media having pit shapes identical with those of the stamper.

If it is possible to simulate irregularity of a playback waveform due to various fluctuations in recording conditions in a recording media such as a CD-R or a DVD-R by adjusting shapes of the phase pits in the exposure process, it is possible to use the ROM media as a test disk for the recording media. In other words, if irregularity of a playback waveform due to a change in mark shapes of the recording media caused by various fluctuations in recording conditions can be simulated by adjusting the phase pits of the ROM media, it is possible to fix a degree of irregularity of a playback waveform. This makes it possible to perform stable inspection with high simulation ability.

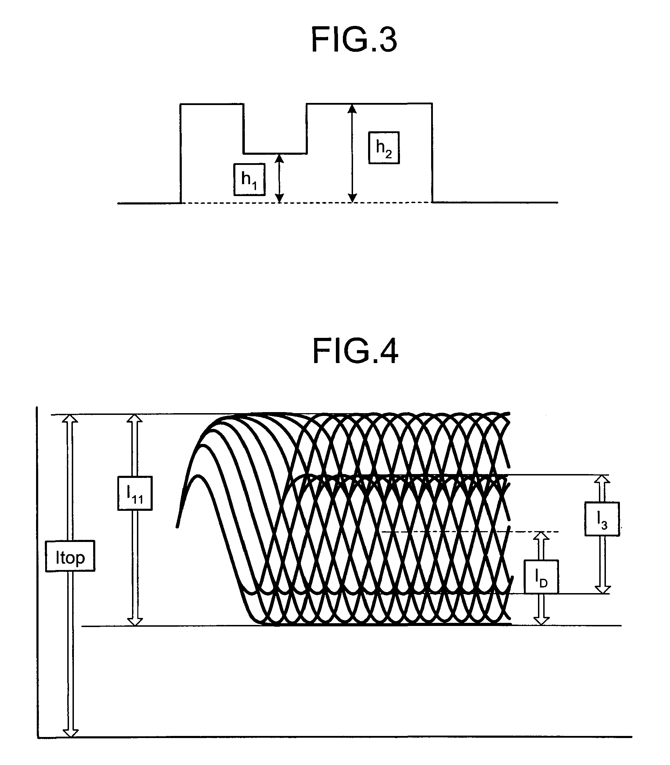

In the present invention, to simulate irregularity of a playback waveform of a recording media using a ROM media, time and a power value of a profile of an exposure waveform (a waveform of a laser beam for forming a mark on a stamper) are varied. Fig. 3 is a diagram of an example of an exposure waveform. It is possible to simulate irregularity of a playback waveform due to fluctuation in recording conditions of the recording media by changing exposure conditions (e.g., changing h₁/h₂ shown in Fig. 3).

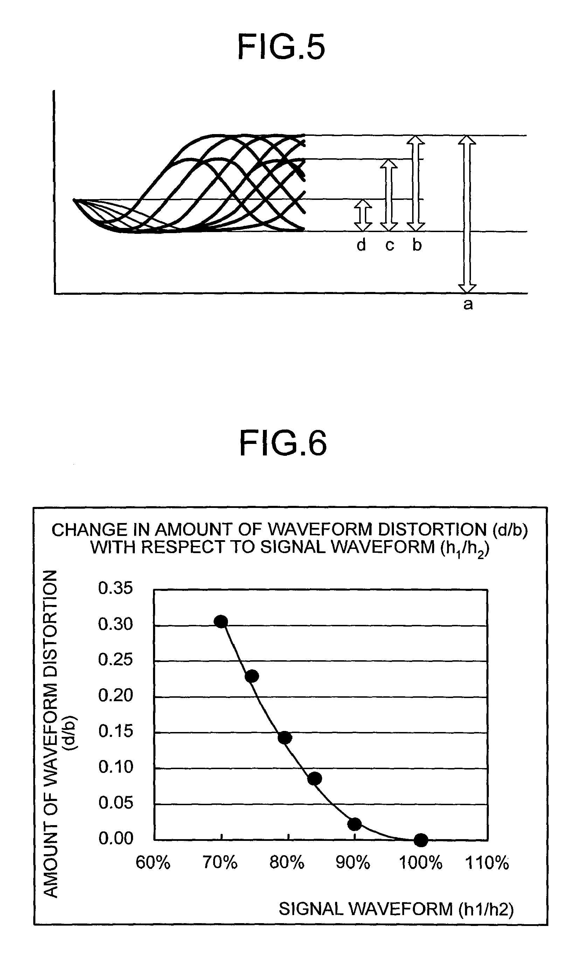

An example of playback waveforms of a ROM media is described. Fig. 4 is a diagram of an example of playback waveforms without irregularity and close to an ideal. Fig. 5 is a diagram of an example of playback waveforms affected by heat accumulation. It is seen that, compared with the ideal playback waveforms in Fig. 4, asymmetrical irregularity of waveforms occurs in the playback waveforms in Fig. 5. d/b (see Fig. 5) is defined as an amount of waveform irregularity due to heat accumulation.

In d/b, b is a distance from a maximum value to a minimum value of the playback waveforms and d is a distance from the minimum value of the playback waveforms to a flat portion of waveforms (or a maximum value of the waveforms, etc.) different from the original playback waveforms (caused by an influence of the heat accumulation).

It is possible to change a level of the amount of waveform irregularity d/b due to heat accumulation by adjusting the exposure waveform shown in Fig. 3. Fig. 6 is a graph of a relation between h₁/h₂ of the exposure waveform and the amount of waveform irregularity d/b. As shown in the figure, it is seen that it is possible to simulate irregularity of a playback waveform due to heat accumulation in recording media such as a CD-R, a CD-RW, a DVD-R, and a DVD-RW by adjusting h₁/h₂ of the exposure waveform.

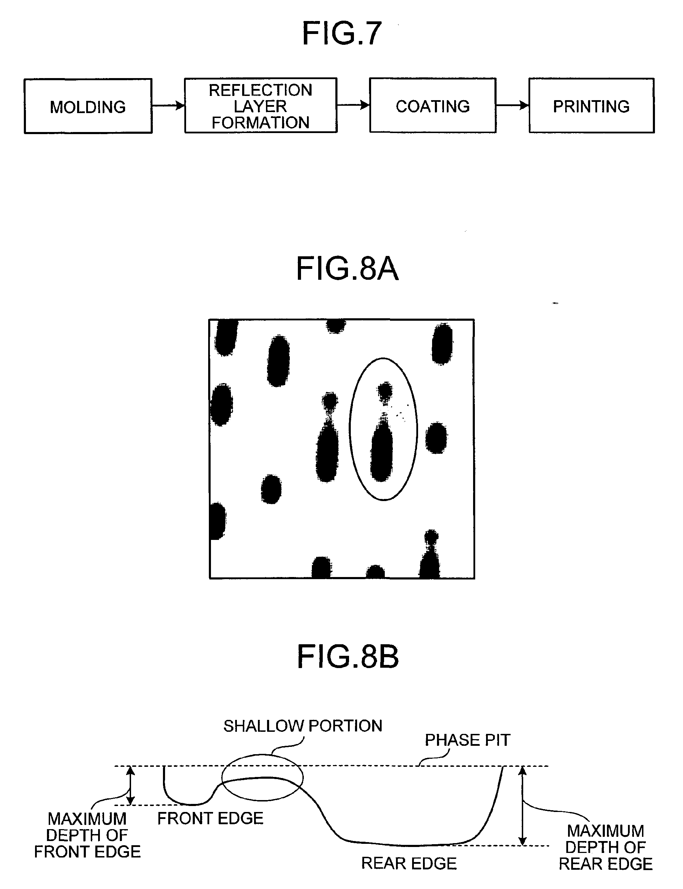

Fig. 7 is a diagram for explaining a manufacturing process for a ROM media after molding. It is possible to simulate irregularity of waveforms due to heat accumulation at the time of recording in CD-R and CD-RW media in the market by a ROM media, by adjusting h₁/h₂ to set the amount of waveform irregularity d/b due to heat accumulation to 0 to 0.3 and by manufacturing the ROM media according to the manufacturing process shown in Fig. 7. Variation of d/b of the CD-R and CD-RW in the actual market is in a range of 0 to 0.3. It is possible to manufacture a test disk with high simulation ability of same conditions by manufacturing a ROM media with d/b set in this range.

Fig. 8A is a diagram of an example of phase pits formed on a resist substrate when h_{1/}h₂ is adjusted. As shown in the figure, a special phase pit, a depth of which in a predetermined mark length is not uniform from a front edge to a rear edge thereof, is formed on a stamper by adjusting h₁/h₂, specifically, adjusting exposure outputs (powers) of h₁ and h₂ and widths of exposure portions (exposure times) of h₁ and h₂. When a ROM media manufactured by using such a stamper is played by a playback device, a predetermined irregularity is produced in the playback waveform, in other words, the playback waveform deforms into a special shape.

In the exposure waveform in Fig. 3, if h₁/h₂=1, it is possible to form a satisfactory phase pit, depth of which in a predetermined mark length is substantially uniform from a front edge to a rear edge thereof, on a stamper. It is possible to obtain an ideal playback waveform when a ROM media manufactured by the stamper having such an ideal phase pit is played by a playback device.

Fig. 8B is a sectional view of a phase pit formed on the resist substrate when h₁/h₂ is adjusted. In Fig. 8B, as an example, a sectional view of a circled phase pit among phase pits in Fig. 8A is shown. As shown in the figure, depth of this phase pit is not substantially uniform from a front edge to a rear edge thereof and changed in the middle. Specifically, a portion shallower than a maximum depth of the front edge and a maximum depth of the rear edge is formed between the front edge and the rear edge. It is possible to form this shallow portion on the resist substrate by reducing an output of exposure by a predetermined amount from a high level over a predetermined exposure time. It is possible to form a plurality of kinds of special phase pit patterns of various shapes by changing the predetermined exposure time and the predetermined power amount.

Length of this shallow portion is varied according to length of a mark formed on the resist substrate to make it possible to simulate an influence on a playback waveform due to heat accumulation that depends on the mark length. Specifically, the length of the shallow portion is set longer as the length of the mark formed on the resist substrate is increased. Therefore, in the stamper and the ROM media manufactured by the stamper, for example, the shallow portion shown in Fig. 8B is not formed in a shortest mark (3T) and length of a shallow portion of the longest mark of 11T is formed larger than length of the shorter mark of 7T.

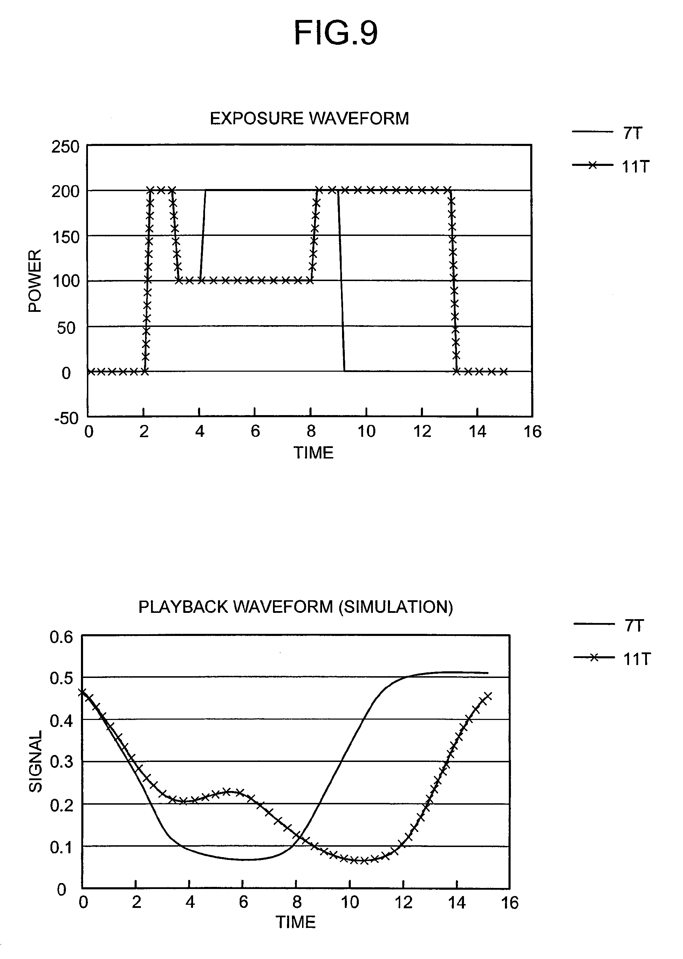

Fig. 9 is a graph of a relation between an exposure waveform and a playback waveform. As indicated by the exposure waveform, a high level (POWER-200) and a low level (POWER-100) reduced by 50% from the high level are used. For example, when a mark length is 7T, a first 1T portion (a front edge) is set to the high level, a 2T portion (a middle portion) is set to the low level, and a 3T to 7T portion (a rear edge) is set to the high level. Every time the mark length is increased by 1T, length of the low level is increased by 1T. When the mark length is 11T, the first 1T portion (the front edge) is set to the high level, the 2T to 6T portion (the middle portion) is set to the low level, and the 7T to 11T portion (the rear edge) is set to the high level. In this way, phase pits are formed on the resist substrate by controlling a level and a width (irradiation time) of h₁/h₂ of the exposure waveform according to a mark length, a stamper is formed, and a ROM media for inspection is manufactured based on the stamper to make it possible to accurately simulate, with the phase pit ROM, an influence on a playback waveform due to a heat accumulation phenomenon that depends on a mark length.

Fig. 9 shows the playback waveform at the mark length of 7T or 11T of a ROM media manufactured based on the stamper on which the phase pits are formed from the exposure waveform described above. In the case of 7T, distortion slightly occurs in the playback waveform. However, in the case of 11T, it is possible to cause distortion like a bump in the playback waveform.

Therefore, it is possible to form a phase pit ROM in which fluctuation in recording conditions in the market is accurately simulated and manufacture a test disk in which the amount of waveform irregularity d/b due to heat accumulation is more accurately simulated.

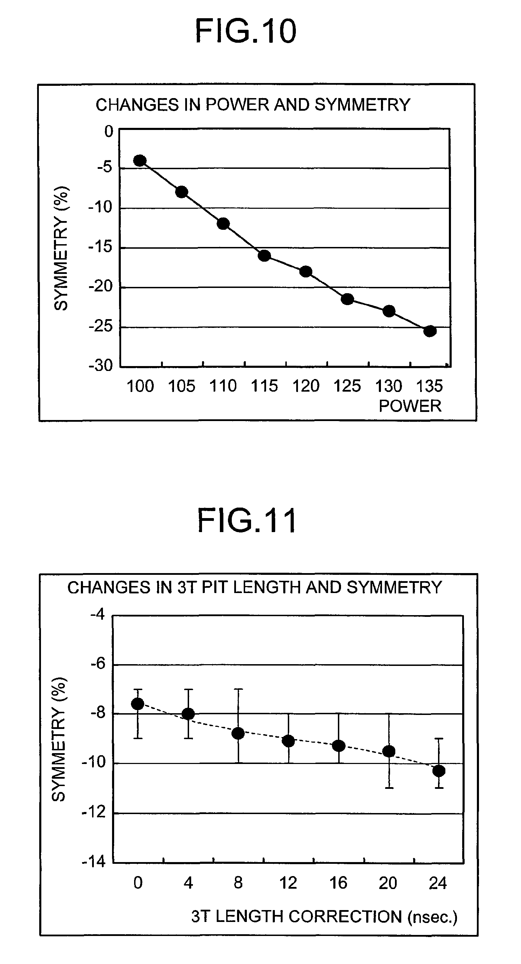

Symmetry is explained. It is possible to simulate symmetry by adjusting power (h₂) of the entire exposure waveform shown in Fig. 3. It is possible to define the symmetry according to an equation Symmetry=(1/2-I_{D}/I₁₁)×100 (%) (see Fig. 4) . ID indicates a distance between a minimum value for the longest mark (11T) and a center value for the minimum mark (3T). I₃ indicates a distance from a minimum value to a maximum value for the shortest mark (3T). Fig. 10 is a diagram of a relation between exposure power and symmetry.

It is possible to simulate asymmetry due to power variation at the time of recording in a CD-R or a CD-RW in the market by setting the symmetry value in a range of 0% to -10%. Since variation of symmetry of a recording media in the actual market is -0.15 to -0.05, it is possible to manufacture a test disk with high simulation ability in fixed conditions by manufacturing a ROM media with symmetry set in this range.

It is also possible to change the symmetry by adjusting a pulse width of the exposure waveform forming the shortest mark (3T). Fig. 11 is a graph of a relation between a pulse width (a 3T pit length) of the shortest mark and symmetry. Now length of the shortest mark (3T) formed by the exposure waveform is defined as l₃ and length of the longest mark (11T) is defined as l₁₁. If a pulse width of the shortest mark is controlled to keep a value obtained by dividing l₁₁ by l₃ in a range of 0.25 to 0.27, it is possible to manufacture a test disk with high simulation ability in fixed conditions.

In the recording media such as a CD-R or a DVD-R, an SN ratio of a playback waveform decreases and jitter increases because of an increase in noise due to various factors related to thermal interference at the time of recording or a pit shape of a media surface. In other words, it is possible to increase a jitter value by applying random noise to the exposure device 10 shown in Fig. 1.

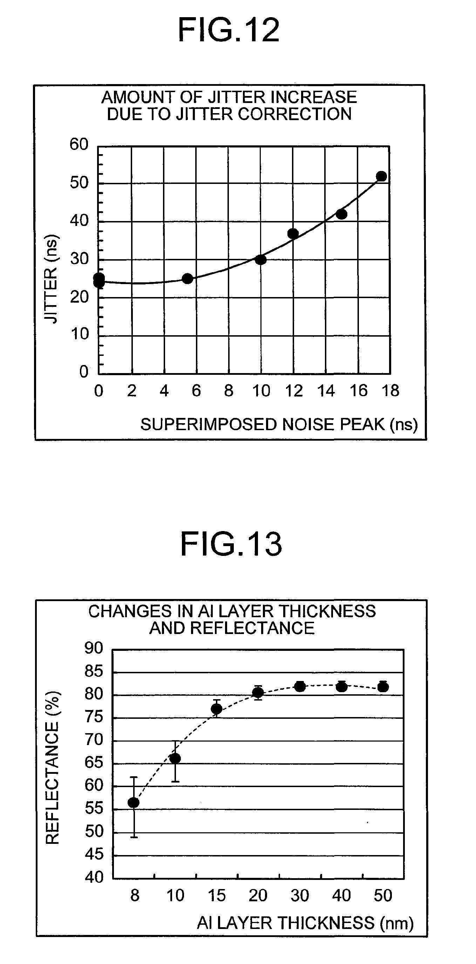

Fig. 12 is a graph of a relation between a level of applied noise and jitter. In a process for forming a stamper, it is possible to quantitatively increase a jitter value by applying random noise determined by a random number of the like on a cutting signal. It is possible to adjust an amount of increase in jitter and manufacture a test disk with high simulation ability in fixed conditions using a ROM media by adjusting a level of applied noise.

The method of simulating irregularity of a playback waveform due to fluctuation in recording conditions of a recording media using a ROM media has been described. However, in the actual market, in addition to the fluctuation in recording conditions, deformation related to a substrate and factors related to a recording layer also occurs. It is possible to provide a test disk more accurately reflecting a state of a recording media in the actual market by simultaneously simulating factors of the deformation related to a substrate and factors related to a recording layer at the disk.

For example, a material and thickness of a recording layer change according to manufacturing variation in a recording media such as a CD-R, a CD-RW, or a DVD-R. Reflectance at the time of playback fluctuates because of variation of the material and the thickness of the recording layer. It is possible to change thickness of a reflection layer by adjusting sputter power or sputter time in a process for forming a metal reflection layer of a ROM media. Fig. 13 is a graph of a relation between Al layer thickness and reflectance. As shown in Fig. 13, it is possible to adjust the reflectance by changing input power at the time of formation of an Al (aluminum) layer to change the thickness.

It is possible to simulate variation of the recording media in the market by setting the reflectance to 60% to 80%. This technology can make the effective media with the necessary reflectance according to adjustment of an Al layer formation process using a substrate in which irregularity of a playback waveform due to the exposure process described above. This makes it possible to provide, with high simulation ability, a test disk reflecting variation in the actual market.

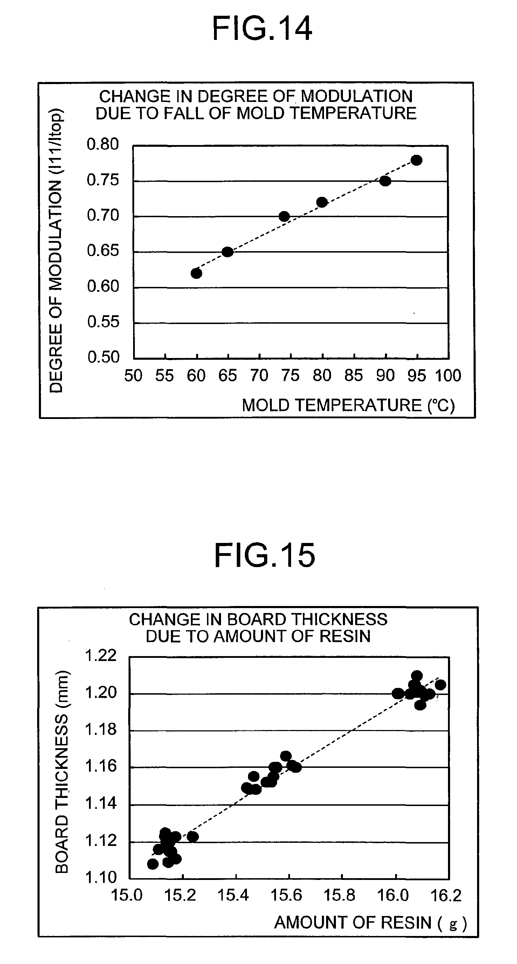

A degree of modulation changes according to variation of depth of tracking grooves of the recording media and the like. It is possible to simulate the degree of modulation on a ROM media by adjusting mold temperature at a molding step (see Fig. 7). Fig. 14 is a graph of a relation between the mold temperature and the degree of modulation. By adjusting the mold temperature the degree of modulation is set to 0.6 to 0.8. This technology can make the effective media with the necessary modulation according to adjustment of the mold temperature and with other fluctuation factors described above. This makes it possible to provide, with high simulation ability, a test disk reflecting variation in the market.

At the molding step of the ROM media manufacturing process (see Fig. 7), an amount of resin such as polycarbonate can be changed to set board thickness of the substrate to about 1.1 millimeters to 1.2 millimeters. The technology, which controls the board thickness of the recording media including the recording layer and the like to 1.1 millimeters to 1.2 millimeters as combined with the other fluctuation factors, can make it possible to provide, a test disk with high simulation ability reflecting variation in the market. Fig. 15 is a graph of a relation between the amount of resin and the board thickness. Besides, it is possible to provide, with high simulation ability, a test disk reflecting variation in the market by further adjusting vertical deviation and eccentricity of the substrate and combining with the other fluctuation factors. Board thickness of the test disk is only substantially same as that of a user recording media and is not limited to 1.1 millimeters to 1.2 millimeters.

In the actual market, it is unusual that the fluctuation factors described above independently occur. Usually, the fluctuation factors simultaneously occur. Therefore, in inspection of a playback device, it is impossible to realize a situation in the actual market and perform accurate inspection simply by independently inspecting the fluctuation factors.

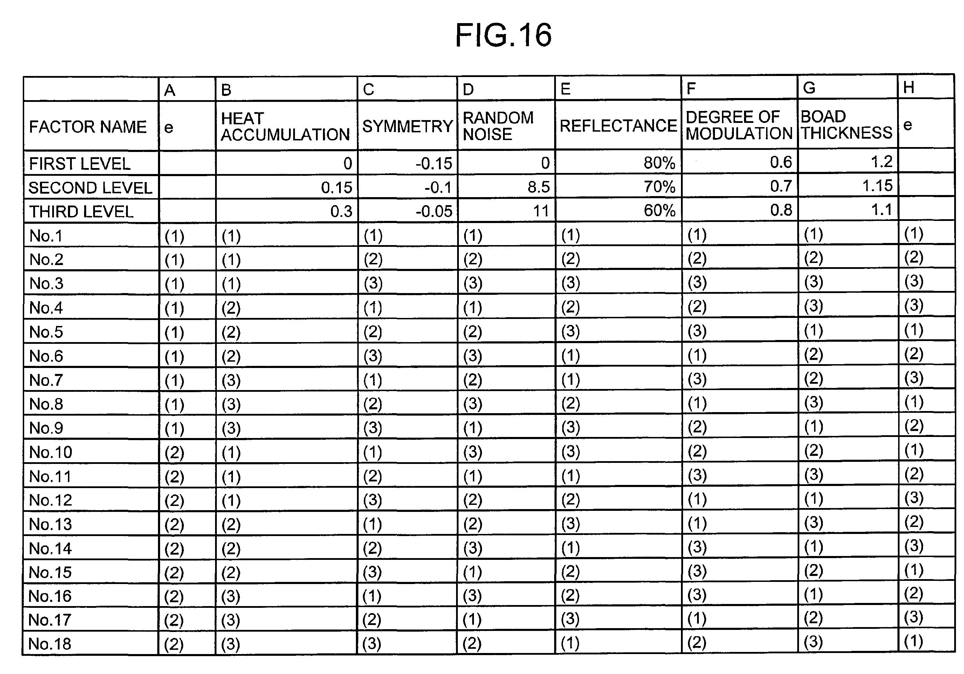

It is possible to solve the problem using an orthogonal array shown in Fig. 16. Fig. 16 is a table of an example of an orthogonal array according to the embodiment. It is possible to simulate variation in the market by simultaneously setting various fluctuation factors according to an array of the orthogonal array shown in Fig. 16. Contribution ratios of the respective fluctuation factors are clarified by setting levels of the various noise factors according to the array of the orthogonal array and measuring jitters of playback waveforms of test disks in respective rows. This makes it possible to obtain a design guideline for improvement of a playability of a playback device.

Set values (1) to (3) corresponding to rows No. 1 to No. 18 of the orthogonal array shown in Fig. 16 correspond to a first level to a third level in the orthogonal array, respectively. For example, the set value (1) at a point where the row No. 1 and a column B cross means the first level of heat accumulation. In this explanation, an orthogonal array L18 is used. However, other orthogonal arrays L9, L8, L12, and the like are also available.

As described above, according to the embodiment, a mark is formed on the resist disk 20 according to set values of indexes representing magnitudes of causes (heat accumulation, symmetry, noise, reflectance, a degree of modulation, board thickness, etc.) affecting deterioration in a quality of a playback signal at the time of signal playback (a quality of a playback signal is deteriorated by shifting the set values from an optimum value). A ROM media is manufactured using the resist disk 20 with the mark formed thereon. This makes it possible to simulate irregularity of a playback waveform that could occur in the market. It is possible to more accurately perform inspection of a playback device using this ROM media.

According to one aspect, a signal is recorded using the stamper on which the mark is formed according to set values of an index representing a magnitude of a cause affecting deterioration in a quality of a playback signal at the time of signal playback. This makes it possible to quantitatively simulate irregularity of a playback waveform that could occur in the market and stably manufacture a large quantity of recording media having a pit shape identical with that of the stamper.

Moreover, the cause affecting deterioration in a quality of a playback signal at the time of signal playback is a degree of modulation, and this degree of modulation is set to 0.6 to 0.8. This makes it possible to quantitatively simulate irregularity of a playback signal that could occur in the market.

Furthermore, the cause affecting deterioration in a quality of a playback signal at the time of signal playback is heat accumulation, and an amount of irregularity of a waveform due to this heat accumulation is set to 0 to 0.3. This makes it possible to quantitatively simulate irregularity of a playback waveform that could occur in the market.

Moreover, the cause affecting deterioration in a quality of a playback signal at the time of signal playback is symmetry, and this symmetry is set to -0.15 to -0.05. This makes it possible to quantitatively simulate irregularity of a playback waveform that could occur in the market.

Furthermore, the cause affecting deterioration in a quality of a playback signal at the time of signal playback is reflectance, and this reflectance is set to 60% to 80%. This makes it possible to quantitatively simulate irregularity of a playback waveform that could occur in the market.

Moreover, the cause affecting deterioration in a quality of a playback signal at the time of signal playback is board thickness of a recording media, and this board thickness is set to 1.1 millimeters to 1.2 millimeters. This makes it possible to quantitatively simulate irregularity of a playback waveform that could occur in the market.

Furthermore, the cause affecting deterioration in a quality of a playback signal at the time of signal playback is random noise, and a noise peak superimposed is set to 0 nanosecond to 11 nanoseconds. This makes it possible to quantitatively simulate irregularity of a playback waveform that could occur in the market.

Moreover, the cause affecting deterioration in a quality of a playback signal at the time of signal playback includes at least one of a degree of modulation, heat accumulation, symmetry, reflectance, board thickness, and random noise. This makes it possible to quantitatively simulate irregularity of a playback waveform that could occur in the market.

Furthermore, depths of phase pits in a predetermined mark are not uniform and a portion shallower than a maximum depth of a front edge and a maximum depth of a rear edge in this mark is formed between the front edge and the rear edge. This makes it possible to simulate irregularity of a playback waveform that could occur in the market.

Moreover, length of the shallow portion is formed larger in a long mark than in a short mark. This makes it possible to simulate irregularity of a playback waveform that could occur in the market.

Furthermore, the shallow portion is not formed in the case of a shortest mark. This makes it possible to simulate irregularity of a playback waveform that could occur in the market.

Although the invention has been described with respect to a specific embodiment for a complete and clear disclosure, the appended claims are not to be thus limited but are to be constructed as embodying all modifications and alternative constructions that may occur to one skilled in the art that fairly fall within the basic teaching herein set forth.

## Claims

1. A recording media that records a signal, wherein
a mark is formed on a stamper according to a set value of an index representing a magnitude of a cause affecting deterioration in a quality of a playback signal at the time of signal playback, and a signal is recorded using the stamper with the mark formed thereon.

2. The recording media according to claim 1, wherein the cause affecting deterioration in a quality of a playback signal at the time of signal playback is a degree of modulation, and the degree of modulation is set to 0.6 to 0.8.

3. The recording media according to claim 1, wherein the cause affecting deterioration in a quality of a playback signal at the time of signal playback is heat accumulation, and an amount of irregularity of a waveform due to the heat accumulation is set to 0 to 0.3.

4. The recording media according to claim 1, wherein the cause affecting deterioration in a quality of a playback signal at the time of signal playback is symmetry, and the symmetry is set to -0.15 to -0.05.

5. The recording media according to claim 1, wherein the cause affecting deterioration in a quality of a playback signal at the time of signal playback is reflectance, and the reflectance is set to 60% to 80%.

6. The recording media according to claim 1, wherein the cause affecting deterioration in a quality of a playback signal at the time of signal playback is board thickness of the recording media.

7. The recording media according to claim 1, wherein the cause affecting deterioration in a quality of a playback signal at the time of signal playback is random noise, and a noise peak superimposed is set to 0 nanosecond to 11 nanoseconds.

8. The recording media according to claim 1, wherein the cause affecting deterioration in a quality of a playback signal at the time of signal playback includes at least one of a degree of modulation, heat accumulation, symmetry, reflectance, board thickness, and random noise.

9. A method of manufacturing a recording media having a signal recorded therein, the method comprising:
forming a mark on a stamper according to a set value representing a magnitude of a cause affecting deterioration in a quality of a playback signal at the time of signal playback; and
manufacturing a recording media having a signal recorded therein using the stamper.

10. The method according to claim 9, wherein the cause affecting deterioration in a quality of a playback signal at the time of signal playback is a degree of modulation, and the degree of modulation is set to 0.6 to 0.8.

11. The method according to claim 9, wherein the cause affecting deterioration in a quality of a playback signal at the time of signal playback is heat accumulation, and an amount of irregularity of a waveform due to the heat accumulation is set to 0 to 0.3.

12. The method according to claim 9, wherein the cause affecting deterioration in a quality of a playback signal at the time of signal playback is symmetry, and the symmetry is set to -0.15 to -0.05.

13. The method according to claim 9, wherein the cause affecting deterioration in a quality of a playback signal at the time of signal playback is reflectance, and the reflectance is set to 60% to 80%.

14. The method according to claim 9, wherein the cause affecting deterioration in a quality of a playback signal at the time of signal playback is board thickness of the recording media.

15. The method according to claim 9, wherein the cause affecting deterioration in a quality of a playback signal at the time of signal playback is random noise, and a noise peak superimposed is set to 0 nanosecond to 11 nanoseconds.

16. The method according to claim 9, wherein the cause affecting deterioration in a quality of a playback signal at the time of signal playback includes at least one of a degree of modulation, heat accumulation, symmetry, reflectance, board thickness, and random noise.

17. A recording media, wherein depths of phase pits in a predetermined mark are not uniform, and a portion shallower than a maximum depth of a front edge and a maximum depth at a rear edge in the mark is formed between the front edge and the rear edge.

18. A recording media according to claim 17, wherein length of the shallow portion is larger in a long mark than in a short mark.

19. The recording media according to claim 17, wherein the shallow portion is not formed in the case of a shortest mark.
